# EUROPÄISCHE PATENTANMELDUNG

(11) **EP 2 273 209 A2**
(43) Veröffentlichungstag der Anmeldung: **12.01.2011**
(21) Anmeldenummer: 10164703.0
(22) Anmeldetag: 02.06.2010
(51) Int. Cl.: F24F 5/00, F24D 3/16

(54) **Vorrichtung zum Temperieren eines Raumes sowie Verfahren zur Herstellung einer solchen Vorrichtung**

(30) Priorität: 05.06.2009 DE 102009026765
(71) Anmelder: caverion GmbH, 70499 Stuttgart (DE)
(72) Erfinder: Laudenberg, Rainer, 52152 Simmerath (DE); Heckmann, Dirk, 52134 Herzogenrath (DE)
(74) Vertreter: Bauer, Dirk

(57) **Zusammenfassung**

Die Erfindung betrifft ein Verfahren sowie eine Vorrichtung (1) zum Temperieren eines Raumes, insbesondere Kühldecke, zur Anbringung unterhalb einer Gebäudedecke (G), mit einer Mehrzahl von langgestreckten, im Wesentlichen parallel zueinander angeordneten Wärmetauscherelementen (3), die jeweils einen sich im Wesentlichen über die gesamte Länge der Wärmetauscherelemente (3) erstreckenden Kanal (8) aufweisen, der von einem Wärmeträgermedium durchströmbar ist, wobei jeweils zwei Kanäle (8) zweier Wärmetauscherelemente (3) an ihren Enden über ein Verbindungsstück (4) fluiddicht miteinander verbunden sind, und mit einer Halteeinrichtung (2), mit der die Wärmetauscherelemente (3) und die Verbindungsstücke (4) unterhalb der Gebäudedecke (G) befestigbar sind. Um eine Vorrichtung gemäß der vorgenannten Art so zu verbessern, dass deren Transport und deren Handling deutlich verbessert ist, ist es erfindungsgemäß vorgesehen, dass die Wärmetauscherelemente (3) einzeln in die an der Gebäudedecke (G) befestigte Halteeinrichtung (2) einlegbar, einschiebbar, einhängbar, einsteckbar oder auf die Halteeinrichtung (2) auflegbar sind und nach Entfernung oder Durchtrennung der zugeordneten Verbindungsstücke (4) einzeln aus der Halteeinrichtung (2) entnehmbar sind.

## Beschreibung

### Einleitung

Die vorliegende Erfindung betrifft eine Vorrichtung zum Temperieren eines Raumes, insbesondere Kühldecke, zur Anbringung unterhalb einer Gebäudedecke, mit einer Mehrzahl von lang gestreckten, im Wesentlichen parallel zueinander angeordneten Wärmetauscherelementen, die jeweils einen sich im Wesentlichen über die gesamte Länge der Wärmetauscherelemente erstreckenden Kanal aufweisen, der von einem Wärmeträgermedium durchströmbar ist, wobei jeweils zwei Kanäle zweier Wärmetauscherelemente an ihren Enden über ein Verbindungsstück fluiddicht miteinander verbunden sind, und mit einer Halteeinrichtung, mit der die Wärmetauscherelemente und die Verbindungsstücke unterhalb der Gebäudedecke befestigbar sind. Darüber hinaus betrifft die vorliegende Erfindung ein Verfahren zur Herstellung einer Vorrichtung zum Temperieren eines Raumes.

### Stand der Technik

Derartige Vorrichtungen zum Temperieren eines Raumes sind allgemein bekannt und werden typischerweise unterhalb einer Raumdecke beziehungsweise in der Zwischendecke eines Raums angebracht, je nachdem, ob die Vorrichtung sichtbar sein oder von Zwischendecken aus Metall- oder Gipskartonplatten abgedeckt werden soll. Wird eine gesamte Raumdecke mit einer Kühldecke versehen, so werden mehrere Vorrichtungen nach Art von Kühldecken- Modulen mit einer Grundfläche von beispielsweise 2 mal 3 Metern oder ähnlich nebeneinander montiert und hydraulisch zu einem Kühldecken- System verbunden.

Die einzelnen Kühldecken- Module haben zwar eine niedrige Bauhöhe, besitzen aber eine große Grundfläche, was den Transport und das Handling der oftmals bis zu 3 m oder längeren Module schwierig macht. Aufgrund ihrer recht sperrigen Geometrie und dem Erfordernis, die hochwertigen Module sorgfältig zu transportieren, benötigen die bekannten Module ein verhältnismäßig großes Transportvolumen bei ihrer Verbringung zu der Baustelle. Darüber hinaus stellt sich ihr Transport in einem Gebäude, beispielsweise durch ein Treppenhaus oder dergleichen, ebenfalls schwierig beziehungsweise unkomfortabel dar und es besteht ferner ein gewisses Risiko von Beschädigungen. Auch die Überkopf-Montage großer Module bedarf des Einsatzes mehrerer Personen und ist zudem recht anstrengend.

### Aufgabe

Aufgabe der vorliegenden Erfindung ist es, eine Vorrichtung gemäß der vorgenannten Art so zu verbessern, dass deren Transport und deren Handling deutlich verbessert ist. Hinsichtlich eines Verfahrens zur Herstellung einer entsprechenden Vorrichtung soll das Ziel erreicht werden, eine einfache und komfortable Montage zu ermöglichen.

### Lösung

Die bezüglich der Vorrichtung genannte Aufgabe wir dadurch gelöst, dass die Wärmetauscherelemente einer Vorrichtung einzeln in die an der Gebäudedecke befestigte Halteeinrichtung einlegbar, einschiebbar, einhängbar, einsteckbar oder auf die Halteeinrichtung auflegbar sind und nach Entfernung oder Durchtrennung der zugeordneten Verbindungsstücke einzeln aus der Halteeinrichtung entnehmbar sind. Das bedeutet, dass die Vorrichtung nicht wie üblich als ein vollständiges, in einem Herstellwerk vorgefertigtes Modul am Einsatzort angebracht wird; vielmehr wird sie aus Einzelteilen vor Ort zusammengesetzt und montiert. Die Einzelteile, nämlich die Halteeinrichtung(en), die Wärmetauscherelemente und die Verbindungsstücke, die jeweils in entsprechender Stückzahl vorliegen müssen, können im Gegensatz zu einer bereits fertig zusammengesetzten Vorrichtung leicht und komfortabel transportiert werden, wobei das Risiko von Beschädigungen der einzelnen Elemente deutlich herabgesetzt ist. Hierbei ist es ferner von Vorteil, dass die einzelnen Elemente von einer einzigen Person transportiert werden können, wobei die vorgenannten Einzelteile auch als Paket zusammengestellt sein können. Es liegt somit bis zum Zeitpunkt der Vor-Ort-Montage lediglich eine Art "Set" (Bausatz) für eine Kühldecke vor.

Aufgrund der erfindungsgemäßen Neuerung, die Vorrichtung zum Temperieren eines Raumes aus den erforderlichen Einzelteilen vor Ort zu montieren, wird nicht nur der Transport derselben erheblich erleichtert, sondern auch das Transportvolumen deutlich verringert. Im Gegensatz zu einer bisher bekannten Vorrichtung kann das Transportvolumen mit der erfindungsgemäßen Vorrichtung auf ein Zehntel reduziert werden, wodurch ferner Transportkosten eingespart werden.

Die erfindungsgemäßen Wärmetauscherelemente können jeweils aus einem den Kanal bildenden geradlinigen Rohrabschnitt und mindestens einer wärmeleitend damit verbundenen und parallel zu dem Rohrabschnitt verlaufenden Wärmetauscherlamelle zusammengesetzt sein. Alternativ können die Kanäle aber auch jeweils integral in dem vorzugsweise als Aluminiumstrangpressprofil ausgebildeten Wärmetauscherelement ausgeformt sein. Gemäß einer Weiterbildung der erfindungsgemäßen Vorrichtung ist es vorgesehen, dass sich die Wärmetauscherelemente jeweils mit einem in einer Montagestellung von der Gebäudedecke weg weisenden Kontaktabschnitt, vorzugsweise in Form ihrer Unterkante oder Unterseite, auf oder in einem hakenförmigen Stützabschnitt der Halteeinrichtung abstützen. Dabei werden die Wärmetauscherelemente mit ihrem Kontaktabschnitt so in dem Stützabschnitt gehalten, dass dort eine Fixierung mittels separaten Befestigungsmitteln nicht erforderlich ist.

Vorteilhafterweise weist die Halteeinrichtung mindestens einen Führungsabschnitt auf, in den ein Wärmetauscherelement mit seiner in der Montagestellung auf die Gebäudedecke zu weisenden Oberkante oder Oberseite einführbar ist, wobei das Wärmetauscherelement in einer in den Führungsabschnitt eingeführten Stellung um eine horizontale, in Längsrichtung des Wärmetauscherelements verlaufende Achse schwenkbar oder in horizontale Richtung verschiebbar ist, um nach einer anschließenden translatorischen Bewegung mit einer vertikalen Bewegungskomponente in die Montagestellung überführbar zu sein. Der Führungsabschnitt kann beispielsweise als Nut ausgebildet sein, die über eine reine Führungsfunktion hinaus ebenfalls eine Abstützfunktion gegen Kippen für das Wärmetauscherelement in seiner Montagestellung bieten kann. Insbesondere wenn die Halteeinrichtung ebenfalls einen vorerwähnten Stützabschnitt aufweist, können die Wärmetauscherelemente werkzeuglos montiert und gegen unbeabsichtigtes Lösen gesichert werden.

Alternativ kann die Halteeinrichtung mindestens einen Klemmabschnitt aufweisen, in den ein Wärmetauscherelement mit einem Kontaktabschnitt, vorzugsweise mit seiner in der Montagestellung auf die Gebäudedecke zu weisenden Oberkante oder Oberseite, einführbar und dadurch klemmend an der Halteeinrichtung befestigbar ist. Hierdurch wird ebenfalls eine schnelle, einfache und werkzeuglose Montage der Wärmetauscherelemente erreicht, die von lediglich einer Person an die Halteeinrichtung angebracht werden können.

Dabei kann der Klemmabschnitt mit Rückhalteelementen und/oder der Kontaktabschnitt mit einer Riffelung oder angerauten Oberfläche versehen sein, wodurch zwischen dem Kontaktabschnitt und dem Klemmabschnitt zumindest ein Mikro-Formschluss entsteht, der ein Herausfallen der Wärmetauscherelemente verhindert.

Eine vorteilhafte Ausführungsform der erfindungsgemäßen Vorrichtung sieht vor, dass mindestens zwei langgestreckte Halteeinrichtungen vorhanden sind, die senkrecht zu den Wärmetauscherelementen verlaufen und die jeweils einerseits mit der Gebäudedecke verbunden und mit denen andererseits jeweils eine Mehrzahl von nebeneinander angeordneten Wärmetauscherelementen halterbar sind. Die Wärmetauscherelemente werden also auf diese Weise an zwei Punkten, vorzugsweise im Bereich ihrer beiden Enden, von der Halteeinrichtung gehalten. Der Abstand der Halteeinrichtungen kann variabel an verschiedene Längen der Wärmetauscherelemente angepasst werden, was bedeutet, dass die Halteeinrichtungen auch als Standard-Elemente gefertigt und für unterschiedlich lange Wärmetauscherelemente verwendet werden können. Das erfindungsgemäße System zeichnet sich daher auch durch seine flexible Anpassungsfähigkeit an verschiedenste Gebäudegrößen und Geometrien aus.

Nach einer Weiterbildung der Vorrichtung sind die Halteeinrichtungen im Querschnitt L-förmige Metallprofile, die jeweils einen sich in der Montagestellung an der Gebäudedecke abstützenden Horizontalschenkel und einen senkrecht hierzu verlaufenden Vertikalschenkel aufweisen, der mit einer Vielzahl von nach unten offenen Aussparungen zur Einführung und Abstützung der Wärmetauscherelemente versehen ist. Nach Anbringung von zwei Halteeinrichtungen an der Gebäudedecke, beispielsweise durch Befestigung des Horizontalschenkels an der Decke über Schrauben, können die Wärmetauscherelemente auf einfache Weise von unten in die offenen Aussparungen eingeführt und jeweils auf einen Stützabschnitt der Halterung aufgelegt werden.

Bezüglich des vorgenannten Verfahrens zur Herstellung einer Vorrichtung zum Temperieren eines Raumes, insbesondere einer Kühldecke, die eine Mehrzahl von langgestreckten, im Wesentlichen parallel zueinander angeordneten Wärmetauscherelementen mit jeweils mindestens einem sich im Wesentlichen über deren gesamte Länge erstreckenden Kanal zur Durchströmung mit einem Wärmetauschermedium, eine Mehrzahl von Verbindungsstücken zur fluiddichten Kopplung der Kanäle jeweils benachbarter Wärmetauscherelemente sowie mindestens eine Halteeinrichtung zur Befestigung der Wärmetauscherelemente und der Verbindungsstücke unterhalb der Gebäudedecke aufweist, wird die eingangs genannte Aufgabe dadurch gelöst, dass zunächst allein die mindestens eine Halteeinrichtung an der Gebäudedecke befestigt wird und danach die Wärmetauscherelemente einzeln in die an der Gebäudedecke befestigte Halteeinrichtung einlegt, eingeschoben, eingehängt, eingesetzt, eingesteckt oder auf die an der Gebäudedecke befestigte Halteeinrichtung aufgelegt werden und schließlich die Kanäle benachbarter Wärmetauscherelemente durch Montage der Verbindungsstücke fluiddicht miteinander gekoppelt werden. Die hierdurch entstehenden Vorteile entsprechen den zu der Vorrichtung genannten Vorteilen.

Vorteilhafterweise wird durch das Einlegen, Einschieben, Einhängen, Einsetzen, Einstecken oder Auflegen der einzelnen Wärmetauscherelemente in die oder auf die an der Gebäudedecke befestigte Halteeinrichtung eine Formschlussverbindung geschaffen.

Es ist von Vorteil, wenn die Wärmetauscherelemente aus Rohrabschnitten, insbesondere Kupferrohr-Abschnitten, und damit wärmeleitend verbundenen Wärmetauscherlamellen, vorzugsweise aus Aluminium, zusammengesetzt sind und dass auf die Kupferrohr-Abschnitte an ihren freien Enden die Verbindungsstücke, die mit bogenförmigen Kupfer-Pressfittings versehen sind oder daraus bestehen, aufgepresst werden.

Die Montage der Vorrichtung gestaltet sich besonders vorteilhaft, wenn die Wärmetauscherelemente bei ihrer Befestigung an der Halteeinrichtung zunächst translatorisch im Wesentlichen auf die Gebäudedecke zu bewegt werden, danach um ihre Längsachse verschwenkt oder im Wesentlichen parallel zu der Gebäudedecke bewegt werden und schließlich in die Montagestellung abgesenkt werden, wodurch die Formschlussverbindung geschaffen wird.

### Ausführungsbeispiel

Die Erfindung wird nachfolgend anhand eines Ausführungsbeispiels einer erfindungsgemäßen Vorrichtung zum Temperieren eines Raumes, die in den Figuren dargestellt ist, näher erläutert.

Es zeigt
- Fig. 1:: eine Draufsicht auf eine erfindungsgemäße Vorrichtung,
- Fig. 2:: einen Vertikalschnitt der Vorrichtung aus Figur 1,
- Fig. 3:: eine vergrößerte Darstellung eines Stegs der Vorrichtung aus Figur 2,
- Fig. 4 bis 6:: jeweils eine vergrößerte Darstellung eines Stegs der Vorrichtung aus Figur 2 mit einem Wärmetauscherelement in verschiedenen Montagepositionen.

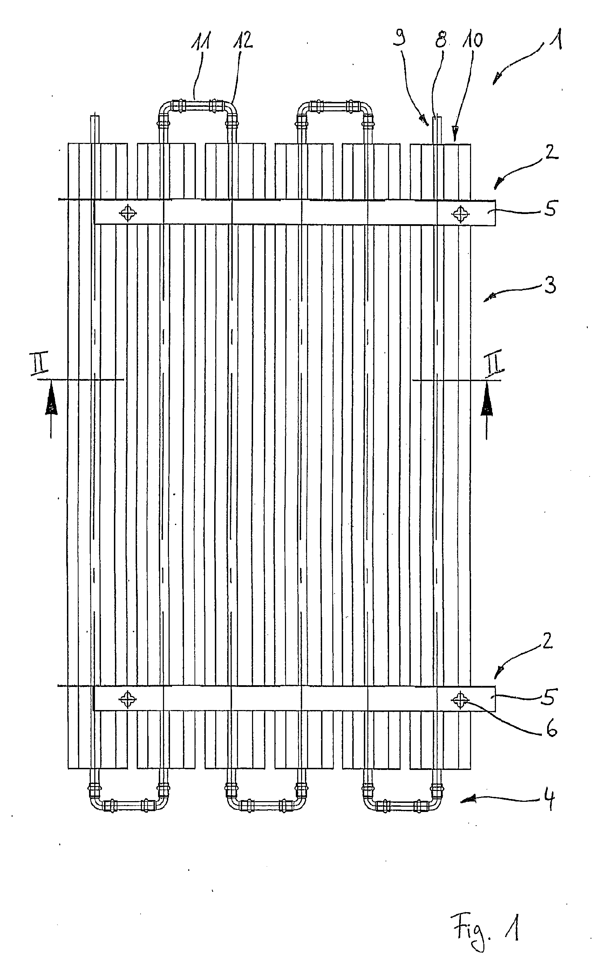

In der Figur 1 ist eine erfindungsgemäße Vorrichtung 1 zum Temperieren eines Raums, die sich aus zwei sich gegenüberliegenden Halteeinrichtungen 2, sechs darin gehaltenen Wärmetauscherelementen 3 und fünf Verbindungsstücken 4 zusammensetzt, in einer Drauf sicht dargestellt.

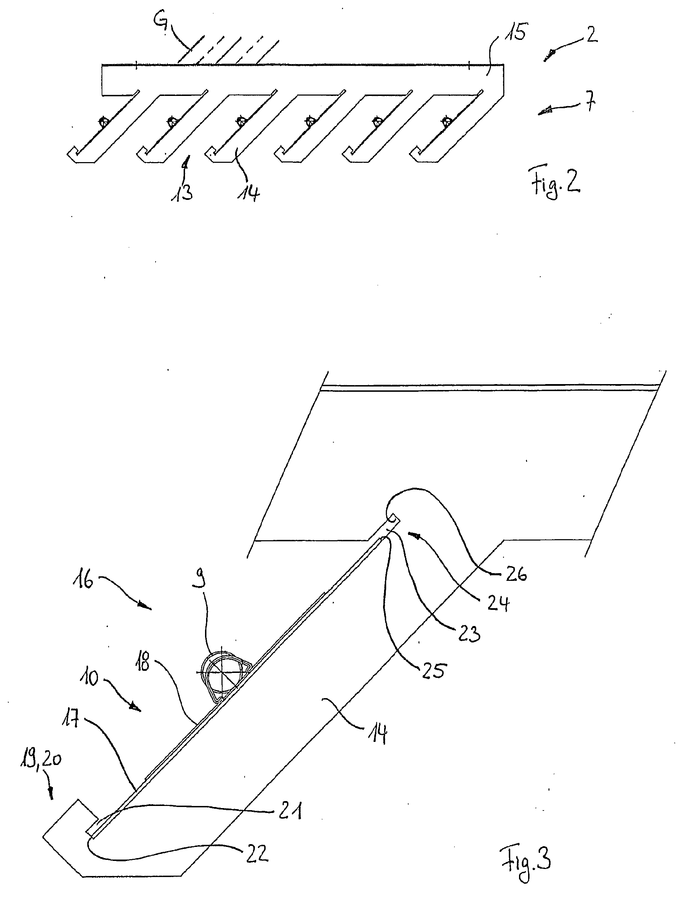

Die langgestreckten Halteeinrichtungen 2 sind in ihrem Querschnitt L-förmig, wobei ein kurzer, sich über die gesamte Länge der Halteeinrichtung 2 erstreckender Horizontalschenkel 5 zur Befestigung der Halteeinrichtung 2 an einer nicht dargestellten Gebäudedecke dient. Zur Durchführung von Befestigungsmitteln, beispielsweise von Schrauben oder Bolzen, zwecks Anbringung der Halteeinrichtung 2 an der Gebäudedecke, sind in den kurzen Horizontalschenkein 5 der Halteeinrichtungen 2 entsprechende Löcher 6 vorgesehen. Der Vertikalschenkel 7, der gegenüber dem Horizontalschenkel 5 deutlich länger ist, geht aus der Figur 2 hervor.

Die Wärmetauscherelemente 3 setzen sich jeweils aus einem einen Kanal 8 bildenden Rohrabschnitt 9 und einer parallel hierzu verlaufenden Wärmetauscherlamelle 10 zusammen, wobei diese Wärmetauscherlamellen 10 gegenüber der Horizontalen geneigt sind, senkrecht zu den Halteeinrichtungen 2 verlaufen und in Längsrichtung jeweils über letztgenannte hinausragen. Folglich ist in der Figur 1 die Projektion der schräg angeordneten Wärmetauscherlamellen 10 zu erkennen.

Die Verbindungsstücke 4 verbinden auf der in der Figur 1 nach unten weisenden Seite der Vorrichtung 1 jeweils zwei Enden von benachbarten Kanälen 8, und zwar den ersten mit dem zweiten Kanal 8, den dritten mit dem vierten Kanal 8 und den fünften mit dem sechsten Kanal 8 (von links nach rechts betrachtet). Auf der gegenüberliegenden Seite der Vorrichtung 1 sind der zweite mit dem dritten und der vierte mit dem fünften Kanal 8 über Verbindungsstücke 4 verbunden, so dass der gesamte Kanalverlauf mäanderförmig ist. Die Verbindungsstücke 4 als solche bestehen jeweils aus einem kurzen geraden Rohrstück 11 und zwei an gegenüberliegenden Enden des letzteren angeordneten Bogenstücken 12. Die Bogenstücke 12 und das Rohrstück 11 können im Herstellwerk als U-förmige Verbindungselemente vorgefertigt werden, um den Montageaufwand auf der Baustelle zu minimieren.

In der Figur 2 ist ein Vertikalschnitt durch die Vorrichtung 1 aus Figur 1 dargestellt, dem insbesondere die Geometrie des Vertikalschenkels 5 der Halteeinrichtung zu entnehmen ist. Der Vertikalschenkel 7 ist mit sechs Aussparungen 13 versehen, die bis zu der der durch eine Schraffur angedeuteten Gebäudedecke G abgewandten Seite der Halteeinrichtung 2 reichen, so dass die Aussparungen 13 nach unten hin offen sind. Zwischen den einzelnen Aussparungen 13 des Vertikalschenkels 7 verbleiben Stege 14, die um etwa 45° gegenüber der Horizontalen geneigt sind. Diese Neigung ist hier nur beispielhaft gewählt und schränkt die vorliegende Erfindung nicht hinsichtlich der Neigung der Stege 14 ein, die gleichfalls 30° oder einen anderen Winkel betragen könnte. Auch ist eine vertikale Ausrichtung der Stege 14, also eine Ausrichtung um 90°, denkbar. Die Stege 14 sind über einen durchgehenden horizontalen Streifen 15 des Vertikalschenkels 7 miteinander verbunden. Die Halteeinrichtung 2 lässt sich umformtechnisch durch Stanzen und Biegen aus Standard-Blechmaterial kostengünstig herstellen.

Der Aufbau der Wärmetauscherelemente 3 sowie deren Lage in ihrer Montagestellung 16 gehen deutlicher aus der Figur 3 hervor, in der ein vergrößerter Ausschnitt eines Steges 14 der Vorrichtung 1 aus Figur 2 dargestellt ist. Die Wärmetauscherlamelle 10 wird durch ein erstes rechteckförmiges Blech 17 gebildet. Zwischen diesem Blech 17 und einem zweiten Blech 18 ist der geradlinige Rohrabschnitt 9 unter leichter Verformung seines Querschnitts flächig und wärmeleitend nach Art eines "Sandwichs" angeordnet.

Auf der der Gebäudedecke G abgewandten Seite weist der Steg 14 einen integral angeformten Haken 19 auf, durch den ein hakenförmiger Stützabschnitt 20 in Form einer ersten Nut 21 für eine von der Gebäudedecke G weg weisenden Unterkante 22 des Wärmetauscherelements 3 geschaffen ist. Die Unterkante 22 bildet demnach eine Art Kontaktabschnitt des Wärmetauscherelements 3, mit dem sich das Wärmetauscherelement 3 in seiner Montagestellung 16 im Bereich des Stützabschnitts 20 der Halteeinrichtung 2 abstützt.

Auf der dem Stützabschnitt 20 gegenüberliegenden Seite des Stegs 14 besitzt die Halteeinrichtung 2 eine zweite, mit der ersten Nut 21 fluchtende Nut 23, die einen Führungsabschnitt 24 der Halteeinrichtung 2 bildet. In der Figur 3, die die Montagestellung 16 des Wärmetauscherelements 3 zeigt, ragt das Wärmetauscherelement 3 in die Nut 23 hinein, wobei jedoch zwischen einer Oberkante 25 des Wärmetauscherelements 3 und dem Nutgrund 26 der Nut 23 ein Abstand verbleibt.

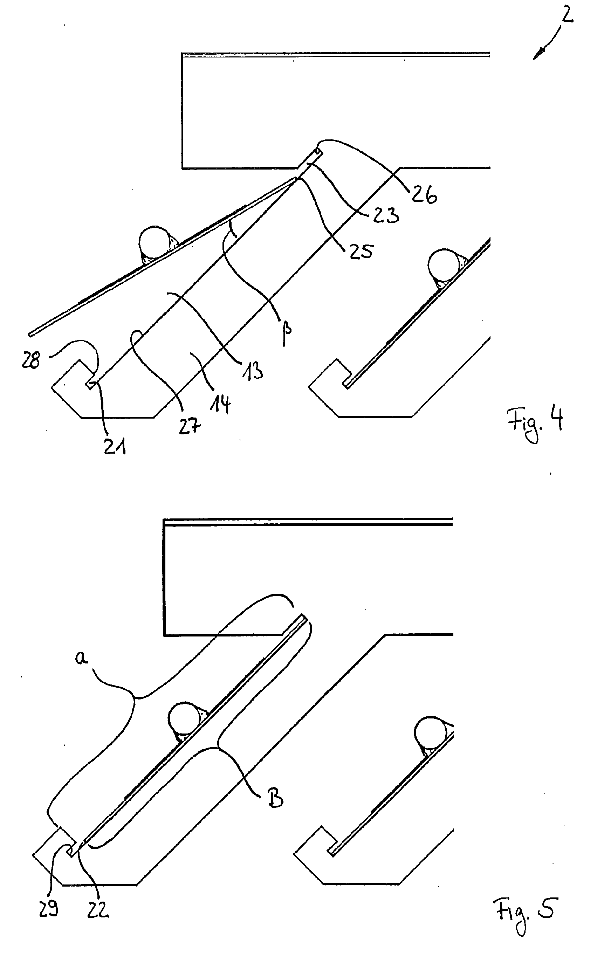

Aus den Figuren 4 bis 6 gehen die einzelnen Schritte bei der Einlegung der Wärmetauscherelemente 3 in die Halteeinrichtungen 2 hervor, wobei nur das linke der beiden dargestellten Wärmetauscherelemente 3 in den verschiedenen Stellungen abgebildet ist. Ausgehend von den zwei bereits an der Gebäudedecke G angebrachten Halteelementen 2 wird das Wärmetauscherelement 3 in einem ersten Schritt (Figur 4) so in die Aussparung 13 geführt, dass die Oberkante 25 auf eine zu der Aussparung 13 weisenden Oberfläche 27 des Stegs 14 trifft, wobei die Ebene der Wärmetauscherlamelle 10 mit der Oberfläche 27 einen Winkel β einschließt. Das Wärmetauscherelement 3 wird dann so weiter geschoben, dass die Oberkante 25 entlang der Oberfläche 27 in Richtung der Nut 23 gleitet, bis die Oberkante 25 an den Nutgrund 26 stößt.

Das Wärmetauscherelement 3 kann dann in Richtung der Oberfläche 27 gedreht werden, bis die Wärmetauscherlamelle 10 mit ihrer Rückseite flächig auf der Oberfläche 27 des Stegs 14 zu liegen kommt, was in der Figur 5 dargestellt ist. Diese Stellung ist nur möglich, da das Wärmetauscherelement 3 eine geringere Breite B aufweist als der Abstand a zwischen der Vorderkante 28 der Nut 21 und dem Nutgrund 26 der Nut 23.

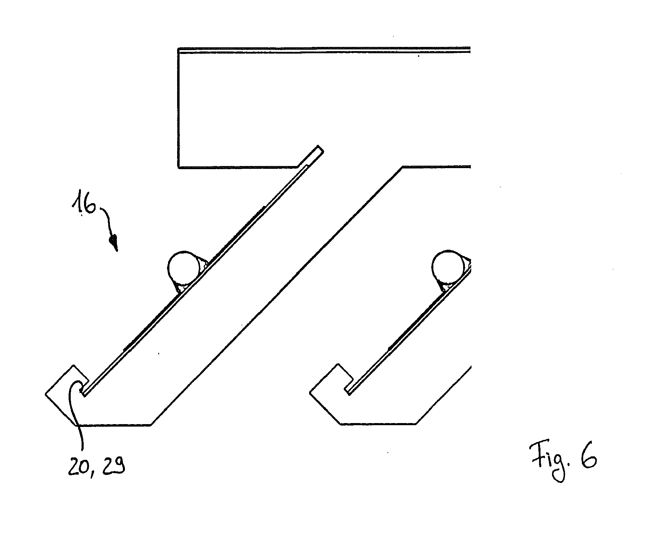

Zur Überführung des Wärmetauscherelements 3 in seine Montagestellung 16 ist es jetzt nur noch erforderlich, diese entlang der Oberfläche 27 in Richtung der Nut 21 zu verschieben, bis die Unterkante 22 des Wärmetauscherelements 3 an den den Stützabschnitt 20 bildenden Nutgrund 29 stößt. Die Montagestellung 16 des Wärmetauscherelements 3 ist nochmals in der Figur 6 gezeigt.

Nachdem die Wärmetauscherelemente 3 in die Halteeinrichtung 2 eingelegt wurden, können die im Zusammenhang mit der Figur 1 beschriebenen Verbindungsstücke 4 angebracht werden.

Eine eventuell erforderliche Demontage der Wärmetauscherelemente 3 (beispielsweise aufgrund einer Undichtigkeit) erfolgt nach Lösen oder Durchtrennung der Verbindungsstücke 4 in umgekehrter Reihenfolge.

### Bezugszeichenliste:

- 1: Vorrichtung
- 2: Halteeinrichtung
- 3: Wärmetauscherelemer
- 4: Verbindungsstück
- 5: Horizontalschenkel
- 6: Loch
- 7: Vertikalschenkel
- 8: Kanal
- 9: Rohrabschnitt
- 10: Wärmetauscherlamelle
- 11: Rohrstück
- 12: Bogenstück
- 13: Aussparung
- 14: Steg
- 15: Streifen
- 16: Montagestellung
- 17: Erstes Blech
- 18: Zweites Blech
- 19: Haken
- 20: Stützabschnitt
- 21: Erste Nut
- 22: Unterkante
- 23: Zweite Nut
- 24: Führungsabschnitt
- 25: Oberkante
- 26: Nutgrund
- 27: Oberfläche
- 28: Vorderkante
- 29: Nutgrund

- a: Abstand
- β: Winkel
- B: Breite
- G: Gebäudedecke

## Patentansprüche

1. Vorrichtung (1) zum Temperieren eines Raumes, insbesondere Kühldecke, zur Anbringung unterhalb einer Gebäudedecke (G), mit einer Mehrzahl von langgestreckten, im Wesentlichen parallel zueinander angeordneten Wärmetauscherelementen (3), die jeweils einen sich im Wesentlichen über die gesamte Länge der Wärmetauscherelemente (3) erstreckenden Kanal (8) aufweisen, der von einem Wärmeträgermedium durchströmbar ist, wobei jeweils zwei Kanäle (8) zweier Wärmetauscherelemente (3) an ihren Enden über ein Verbindungsstück (4) fluiddicht miteinander verbunden sind, und mit einer Halteeinrichtung (2), mit der die Wärmetauscherelemente (3) und die Verbindungsstücke (4) unterhalb der Gebäudedecke (G) befestigbar sind, **dadurch gekennzeichnet, dass** die Wärmetauscherelemente (3) einzeln in die an der Gebäudedecke (G) befestigte Halteeinrichtung (2) einlegbar, einschiebbar, einhängbar, einsteckbar oder auf die Halteeinrichtung (2) auflegbar sind und nach Entfernung oder Durchtrennung der zugeordneten Verbindungsstücke (4) einzeln aus der Halteeinrichtung (2) entnehmbar sind.

2. Vorrichtung nach Anspruch 1, **dadurch gekennzeichnet, dass** die Wärmetauscherelemente (3) jeweils aus einem den Kanal (8) bildenden geradlinigen Rohrabschnitt (9) und mindestens einer wärmeleitend damit verbundenen und parallel zu dem Rohrabschnitt (9) verlaufenden Wärmetauscherlamelle (10) zusammengesetzt sind oder dass die Kanäle jeweils integral in dem vorzugsweise als Aluminiumstrangpressprofil ausgebildeten Wärmetauscherelement ausgeformt sind.

3. Vorrichtung nach Anspruch 1 oder 2, **dadurch gekennzeichnet, dass** sich die Wärmetauscherelemente (3) jeweils mit einem in einer Montagestellung (16) von der Gebäudedecke (G) weg weisenden Kontaktabschnitt, vorzugsweise in Form ihrer Unterkante (22) oder Unterseite, auf oder in einem hakenförmigen Stützabschnitt (20) der Halteeinrichtung (2) abstützen.

4. Vorrichtung nach Anspruch 3, **dadurch gekennzeichnet, dass** die Halteeinrichtung (2) mindestens einen Führungsabschnitt (24) aufweist, in den ein Wärmetauscherelement (3) mit seiner in der Montagestellung (16) auf die Gebäudedecke (G) zu weisenden Oberkante (25) oder Oberseite einführbar ist, wobei das Wärmetauscherelement (3) in einer in den Führungsabschnitt (24) eingeführten Stellung um eine horizontale, in Längsrichtung des Wärmetauscherelements (3) verlaufende Achse schwenkbar oder in horizontale Richtung verschiebbar ist, um nach einer anschließenden translatorischen Bewegung mit einer vertikalen Bewegungskomponente in die Montagestellung (16) überführbar zu sein.

5. Vorrichtung nach einem der Ansprüche 1 bis 3, **dadurch gekennzeichnet, dass** die Halteeinrichtung mindestens einen Klemmabschnitt aufweist, in den ein Wärmetauscherelement mit einem Kontaktabschnitt, vorzugsweise mit seiner in der Montagestellung auf die Gebäudedecke zu weisenden Oberkante oder Oberseite, einführbar und **dadurch** klemmend an der Halteeinrichtung befestigbar ist.

6. Vorrichtung nach Anspruch 5, **dadurch gekennzeichnet, dass** der Klemmabschnitt mit Rückhalteelementen und/oder der Kontaktabschnitt mit einer Riffelung oder angerauten Oberfläche versehen ist, wodurch zwischen dem Kontaktabschnitt und dem Klemmabschnitt zumindest ein Mikro-Formschluss entsteht.

7. Vorrichtung nach einem der Ansprüche 1 bis 6, **dadurch gekennzeichnet, dass** mindestens zwei langgestreckte Halteeinrichtungen (2) vorhanden sind, die senkrecht zu den Wärmetauscherelementen (3) verlaufen und die jeweils einerseits mit der Gebäudedecke (G) verbunden und mit denen andererseits jeweils eine Mehrzahl von nebeneinander angeordneten Wärmetauscherelementen (3) haiterbar sind.

8. Vorrichtung nach Anspruch 7, **dadurch gekennzeichnet, dass** die Halteeinrichtungen (2) im Querschnitt L-förmige Metallprofile sind, die jeweils einen sich in der Montagestellung (16) an der Gebäudedecke (G) abstützenden Horizontalschenkel (5) und einen senkrecht hierzu verlaufenden Vertikalschenkel (7) aufweisen, der mit einer Vielzahl von nach unten offenen Aussparungen (13) zur Einführung und Abstützung der Wärmetauscherelemente (3) versehen ist.

9. Vorrichtung nach einem der Ansprüche 1 bis 8, **dadurch gekennzeichnet, dass** die dem Raum zugewandte Strahlungsfläche von den Wärmetauscherelementen (3) gebildet wird.

10. Verfahren zur Herstellung einer Vorrichtung (1) zum Temperieren eines Raumes, insbesondere einer Kühldecke, die eine Mehrzahl von langgestreckten, im Wesentlichen parallel zueinander angeordneten Wärmetauscherelementen (3) mit jeweils mindestens einem sich im Wesentlichen über deren gesamte Länge erstreckenden Kanal (8) zur Durchströmung mit einem Wärmetauschermedium, eine Mehrzahl von Verbindungsstücken (4) zur fluiddichten Kopplung der Kanäle (8) jeweils benachbarter Wärmetauscherelemente (3) sowie mindestens eine Halteeinrichtung (2) zur Befestigung der Wärmetauscherelemente (3) und der Verbindungsstücke (4) unterhalb der Gebäudedecke (G) aufweist, **dadurch gekennzeichnet, dass** zunächst allein die mindestens eine Halteeinrichtung (2) an der Gebäudedecke (G) befestigt wird und danach die Wärmetauscherelemente (3) einzeln in die an der Gebäudedecke (G) befestigte Halteeinrichtung (2) einlegt, eingeschoben, eingehängt, eingesetzt, eingesteckt oder auf die an der Gebäudedecke (G) befestigte Halteeinrichtung (2) aufgelegt werden und schließlich die Kanäle (8) benachbarter Wärmetauscherelemente (3) durch Montage der Verbindungsstücke (4) fluiddicht miteinander gekoppelt werden.

11. Verfahren nach Anspruch 10, **dadurch gekennzeichnet, dass** durch das Einlegen, Einschieben, Einhängen, Einsetzen, Einstecken oder Auflegen der einzelnen Wärmetauscherelemente (3) in die oder auf die an der Gebäudedecke (G) befestigte Halteeinrichtung (2) eine Formschlussverbindung geschaffen wird.

12. Verfahren nach Anspruch 10 oder 11, **dadurch gekennzeichnet, dass** die Wärmetauscherelemente (3) aus Rohrabschnitten (9), insbesondere Kupferrohr-Abschnitten, und damit wärmeleitend verbundenen Wärmetauscherlamellen (10), vorzugsweise aus Aluminium, zusammengesetzt sind und dass auf die Kupferrohr-Abschnitte an ihren freien Enden die Verbindungsstücke (4), die mit bogenförmigen Kupfer- Pressfittings versehen sind oder daraus bestehen, aufgepresst werden.

13. Verfahren nach einem der Ansprüche 10 bis 12, **dadurch gekennzeichnet, dass** die Wärmetauscherelemente (3) bei ihrer Befestigung an der Halteeinrichtung (2) zunächst translatorisch im Wesentlichen auf die Gebäudedecke (G) zu bewegt werden, danach um ihre Längsachse verschwenkt oder im Wesentlichen parallel zu der Gebäudedecke (G) bewegt werden und schließlich in die Montagestellung (16) abgesenkt werden, wodurch die Formschlussverbindung geschaffen wird.
